# NEW EUROPEAN PATENT SPECIFICATION

(11) **EP 2 162 388 B2**
(45) Date of publication and mention of the opposition decision: **30.01.2019**
(45) Mention of the grant of the patent: 29.02.2012
(21) Application number: 08747821.0
(22) Date of filing: 08.05.2008
(51) Int. Cl.: C01B 25/237, C01B 25/16, C08F 14/18, C08F 214/18, C08F 8/00, C08F 114/18

(54) **PROCESS FOR REMOVING FLUORINATED COMPOUNDS FROM AN AQUEOUS PHASE ORIGINATING FROM THE PREPARATION OF FLUOROPOLYMERS**
VERFAHREN ZUR ENTFERNUNG VON FLUORIERTEN VERBINDUNGEN AUS EINER WÄSSRIGEN PHASE, DIE AUS DER HERSTELLUNG VON FLUORPOLYMEREN STAMMT
PROCÉDÉ DESTINÉ À ÉLIMINER LES COMPOSÉS FLUORÉS D'UNE PHASE AQUEUSE PROVENANT DE LA PRÉPARATION DE POLYMÈRES FLUORÉS

(30) Priority: 25.06.2007 GB 0712191
(43) Date of publication of application: 17.03.2010
(73) Proprietor: 3M Innovative Properties Company, St. Paul, MN 55133-3427 (US)
(72) Inventor: HINTZER, Klaus, 84504 Burgkirchen (DE); JÜRGENS, Michael, 84504 Burgkirchen (DE); MAURER, Andreas R., 84504 Burgkirchen (DE); SCHWERTFEGER, Werner, 84504 Burgkirchen (DE); ZIPPLIES, Tilman C., 84504 Burgkirchen (DE); LOCHHAAS, Kai H., 84504 Burgkirchen (DE); KASPAR, Harald, 84504 Burgkirchen (DE)
(74) Representative: Kurz, Arnd
(86) International application number: PCT/US2008/062976
(87) International publication number: WO 2009/002617

(56) References cited:
- EP-A1- 1 493 716
- WO-A1-91/07354
- WO-A2-2005/032498
- GB-A- 762 011
- GB-A- 1 466 473
- JP-A- 2003 181 466
- US-A- 4 205 143
- US-A- 5 442 097
- US-A- 6 059 978
- US-A1- 2005 230 318
- US-A1- 2006 196 834
- US-A1- 2007 274 942
- US-B1- 6 613 941
- US-B1- 6 613 941
- US-B1- 6 680 357
- US-B1- 6 706 193
- US-B2- 6 660 818
- US-B2- 6 737 489
- US-B2- 6 887 927

## Description

### Field of the invention

The present invention relates to a process of removing fluorinated compounds, in particular partially fluorinated polymers, such as, elastomers, from an aqueous phase, preferably waste water.

### Background of the invention

Fluoropolymers, that is, polymers having a fluorinated backbone, have long been known and used in various applications because of their desirable properties such as heat resistance, chemical resistance, weatherability, UV-stability. Various fluoropolymers are for example described in "Modern Fluoropolymers", edited by John Scheirs (ed), Wiley Science 1997. The fluoropolymers may have a partially fluorinated backbone, generally at least 40 % by weight fluorinated, or a fully fluorinated backbone. Particular examples of fluoropolymers include polytetrafluoroethylene (PTFE), copolymers of tetrafluoroethylene (TFE) and hexafluoropropylene (HFP) (so-called FEP polymers), fluoropolymers containing perfluoroalkoxy copolymers (so-called PFA polymers), ethylene-tetrafluoroethylene copolymers (ETFE), terpolymers of TFE, HFP and vinylidene fluoride (so-called THV polymers) and polyvinylidene fluoride polymers (PVDF). Fluoropolymers also include amorphous fluoropolymers, which upon curing become elastomeric properties, such as so-called FKM polymers or FFKM polymers.

A frequently used method for producing fluoropolymers involves aqueous emulsion polymerization. This method generally involves the use of fluorinated emulsifiers. Perfluorinated carboxylic acids, such as perfluorooctanoic acids and salts thereof, in particular ammonium perfluorooctanoic acid (APFO), are commonly used for this purpose. The fluoropolymers are typically separated from the aqueous reaction mixture by coagulating and removing the aqueous phase. The obtained aqueous phase usually contains non-coagulated fluoropolymer particles and fluorinated emulsifiers. The fluorinated emulsifiers stabilize the non-coagulated fluoropolymer particles and form stable colloidal dispersions in which the particles are finely dispersed. Typically, these colloidal dispersions cannot be effectively treated by common filtration techniques. Therefore, known methods of treating fluoropolymer waste water typically employ anion-exchange processes and at least one further separation technique. Anion-exchange resins are used to separate the fluorinated emulsifiers from the waste water. Removing the fluorinated emulsifiers by anion-exchange resins leads to destabilization and precipitation of the fluoropolymer particles. Precipitated particles may clog the anion exchange resin and reduce its capacity. Therefore, the waste water is typically stabilized, for example, by adding non-ionic surfactants as described, for example, in US 6,706,193 B1. Non-ionic surfactant and fluoropolymer particles have to be removed separately after the ion-exchange step.

In an alternative approach fluoropolymers may be prepared in aqueous media without using fluorinated emulsifiers. Such a method has been described in, for example, WO2007/038561. However, although no fluorinated emulsifiers were used, fluorinated low molecular weight oligomers were generated in situ. These oligomers were found to behave like fluorinated emulsifiers in that they were capable of stabilizing non-coagulated fluoropolymer particles by forming stable colloidal dispersions. Like the above-cited prior art, WO2007/038561 also suggests to treat the waste water by anion-exchange chromatography for removing the oligomers.

Although these methods may lead to an appropriate removal of fluorinated compounds from waste water, they are cost-intensive. First of all, ion-exchange technology is comparatively expensive. Additionally, the above-described methods do not only require ion-exchange technology but also at least another different separation technique. This increases maintenance and equipment costs.

Furthermore, it has been found that the presence of inorganic or organic salts may reduce the capacity of the anion exchange resins rendering the removal of fluorinated emulsifiers from waste water containing high amounts of salts less efficient. High amounts of salts are typically present when the fluoropolymers are separated from aqueous dispersions by salt-induced coagulation. In this type of coagulation the aqueous fluoropolymer dispersions are destabilised by increasing the ionic strength of the aqueous phase by adding inorganic or organic salts until the fluoropolymers coagulate.

This reduced efficacy of anion exchange resins in the presence of organic or inorganic salts has been observed to be particularly pronounced in the preparation of partially fluorinated fluoropolymers, such as, elastomers. In such processes partially fluorinated oligomers having anionic end groups may be formed as by-products. These oligomers tend to bind less strongly to anion-exchange resins than perfluorinated emulsifiers and are easily replaced by competing salt anions, reducing the effectiveness of the anion exchange technology.

### Summary of the invention

There is still a need for providing a cost-effective method of removing fluorinated compounds from an aqueous phase.

Therefore, there is provided a process of reducing the amount of fluorinated compounds in an aqueous phase, as claimed, the process comprising
a) adding to the aqueous phase one or more polycationic polymers or precursor polymers thereof to cause at least partial precipitation of fluorinated compounds and
b) adding to the aqueous phase one or more polyanionic polymers.

An advantage of the processes provided herein is that efficient removal of fluorinated compounds can be achieved using a single separation technique instead of multiple different ones.

A further advantage is that cost-intensive column technology is not required because the same or even improved efficacy in removing fluorinated compounds is achieved.

Yet another advantage is that no additional surfactants, in particular non-ionic surfactants have to be added to the aqueous phase reducing the total organic content (TOC) of the waste water.

A further advantage of the processes can be seen in that the amount of fluoropolymer particles, fluorinated molecular weight oligomers, and if present fluorinated emulsifiers, may be reduced simultaneously.

Additionally, the processes allow for the recovery of at least some of the fluorinated compounds after their separation from the aqueous phase.

Desirably, the processes can be applied with comparable efficiency equally to aqueous phases containing high quantities or low amounts of fluorinated compounds.

In particular there is provided:
1. A process for reducing the amount of fluorinated compounds in an aqueous phase, the process comprising
   a) adding to the aqueous phase one or more polycationic polymers or precursor polymers thereof to cause at least partial precipitation of fluorinated compounds, and
   b) adding to the aqueous phase one or more polyanionic polymers,
   wherein b) is carried out after or simultaneously with a), and wherein the aqueous phase is generated in the production of fluoropolymers comprising repealing units derived from vinylidene fluoride (VDF).
2. The process according to 1. wherein the aqueous phase contains at least 20 ppm of a fluorinated emulsifier.
3. The process according to any one of 1. to 2, wherein the polycationic polymers or precursor polymers thereof have a molecular weight (number average) of at least 5,000 g/mol.
4. The process according to any one of 1. to 3, wherein the polyanionic polymers have a molecular weight (number average) of at least 5,000 g/mol.
5. The process according to any one of 1. to 4, wherein the aqueous phase comprises less than 10 % wt. of solids. (ISO 12086).
6. The process according to any one of 1. to 5, wherein the aqueous phase contains at least 50 µg per g of aqueous phase of anions selected from the group consisting of chloride, nitrate, phosphate, hydrogen phase, sulphate, hydrogensulfate, monocarboxylate, dicarboxylate, sulfonate, phosphonate or a combination thereof.
7. The process according to any one of 1. to 6, wherein the aqueous phase has been obtained after salt-induced coagulation of the fluoropolymers.
8. The process according to any one of 1. to 7, further comprising acidifying the precipitate and recovering one or more fluorinated compounds from the precipitate by extraction of distillation.

### Detailed description of the invention

The aqueous phase is generated in the production of fluoropolymers comprising repeating units derived from VDF, such as, e. g., the preparation and/or the purification and work-up of the fluoropolymers.

Preferably, the aqueous phase originates from the production of such fluoropolymers using an aqueous medium, such as, e. g., aqueous emulsion or suspension polymerization. More preferably, the aqueous phase is obtained after separating fluoropolymers from aqueous dispersions. Preferably, this is achieved by salt-induced coagulation, i. e, coagulation by increasing the ionic strength of the dispersion through addition of salts to the dispersion. Salt-induced coagulation is typically carried out by adding low molecular weight salts (typically salts having a molecular weight of less than 800 g/mol or less than 500 g/mol) to the dispersion. These salts may be organic or inorganic. The aqueous phase may contain at least about 5, or at least about 50, or at least about 150, or at least about 500 µg per g waste water of one or more organic and/or inorganic salt anions. Typical inorganic salt anions include chloride, bromide, iodide, nitrate, phosphate, hydrogen phosphate, sulphate, hydrogen sulphate, sulfides, hydrogen sulfides or mixtures and combinations thereof.

The aqueous phase may also include at least about 50 or at least about 500 µg per g of aqueous phase of non-fluorinated organic acid anions. Typical organic anions include mono-, di- or polysulfonates, mono-, di- or polyphosphonates, mono-, di- or poylcarboxylates, such as for example oxalates, citrates, formiates, acetates, lactates, malonates or combinations thereof. sulphate, aluminium chloride, aluminium hydroxide, acetates, oxalates, citrates, formiates, lactates.

The aqueous phase may also be obtained after washing the fluoropolymers, obtained after washing reaction vessels used in the polymerization or obtained from treatment of exhausts from the fluoromonomer polymerization in scrubbers.

Preferably, the aqueous phase is waste water, such as, for example, waste water collected during polymer preparation and work-up of fluoropolymers. Therefore, the aqueous phase may contain low amounts of fluoropolymers or solids, such as, up to about 10 % or up to about 5 % or up to about 1 % by weight based on the weight of the aqueous phase. The aqueous phase may further contain at least 1 ppm of a fluorinated emulsifier. The aqueous phase may contain at least 20 ppm, at least 50 ppm, at least 150, at least 500 ppm or at least 1,000 ppm of a fluorinated emulsifier. The fluorinated emulsifiers may be those that have been added prior or during the polymerisation or those that may be formed in situ during the polymerization.

Unless expressed otherwise, any amounts given in ppm or % wt. are based on the weight of the aqueous phase.

Preferably, the aqueous phase is obtained after salt-induced coagulation of the fluoropolymers.

In one embodiment, the aqueous phase is waste water that has not been submitted to an anion-exchange resin.

### Fluoropolymers

The fluoropolymers comprise repeating units derived from monomers, such as fluorinated olefins. The polymers may comprise at least 10 or at least 20 repeating units.
The fluoropolymers may be obtained by polymerization of VDF or copolymerization of VDF with fluorinated olefins, such as for example tetrafluoroethylene (TFE), hexafluoropropylene (HFP), chlorotrifluoroethylene (CTFE), perfluorinated or partially fluorinated alkylvinylether, such as for example perfluoromethylvinyl ether (PMVE), perfluoropropylvinylether, perfluoroisopropylvinlyether, perfluorinated or partially fluorinated allylether or vinyl ether, such as for example compounds of the general formula

CF₂=CF-(CF₂)ₙ-O-R_{F}

with n being O or 1 and R_{F} being a C₁ - C₁₀ (perfluorinated, partially fluorinated or non fluorinated) alkyl or alkyloxy residue with 1 to 5 oxygen atoms, such as, for example, CF₂=CF-O-(CF₂)₃OCF₃, CF₂=CFO(CF₂)₂OCF₃, or fluorinated olefins further containing one or more polar group selected from the groups -CN, -Br, -1, -SO₂F, -COOR,-SO₃-, -COO- or mixtures thereof.

Non-fluorinated olefins, such as for example ethylene (E) or propylene (P), may also be used as comonomers.

The fluoropolymers comprise repeating units derived from VDF. They may comprise repeating units derived from monomers selected from:
VDF, HFP and TFE;
VDF, HFP, TFE and a non fluorinated olefin such as ethylene (E) or propylene (P); TFE, VDF and E or P;
VDF, HFP, TFE and PMVE;
VDF, HFP, TFE, PMVE and E or P.
These polymers may further contain one or more units derived from fluorinated or partially fluorinated olefins containing one or more curable moieties, for example, polar group, such as, -CN,
-Br, -I, -SO₂F, -COOR,-SO₃⁻, -COO⁻ or mixtures thereof.

The fluoropolymers may be partially fluorinated. This means the fluoropolymers contain repeating units comprising one or more -CH₂- and/or -CFH- moieties.

The fluoropolymers may be amorphous. Amorphous fluoropolymers do not have a distinct melting point. Amorphous, partially fluorinated fluoropolymers are generally used in the preparation of fluoroelastomers. Although fluoroelastomers obtain their elastomeric properties after curing, polymers used in the preparation of elastomers are also referred to as elastomers. Therefore, the waste water may also be waste water obtained from the preparation of elastomers, which are armorphous, partially fluorinated fluoropolymers.

The fluoropolymers may have a molecular weight (number average, Mₙ) of greater than about 5,000 g/mol. The molecular weight can be determined by standard methods, for example gel permeation chromatography).

### Fluorinated emulsifiers

The aqueous phase may contain one or more fluorinated emulsifiers. Fluorinated emulsifiers as used herein are low molecular weight organic compound having one or more -COO⁻, -OSO₄⁻ or -SO₃⁻ groups and having a molecular weight (as far as the anionic part of the molecule is concerned, that is, without the molecular weight of the counterions, such as, cations or H⁺) of less than about 1000 g/mol, preferably less than 500 g/mol.

Typically, the fluorinated emulsifiers correspond to the formula:

(Y-R_{f}-Z) M (I)

wherein Y represents Cl or F; R_{f} represents a linear or branched perfluorinated alkylene having 4 to 10 carbon atoms; Z represents COO⁻, OSO₃⁻ or SO₃⁻; M represents a monovalent cation, for example, an alkali metal ion or an ammonium ion.

Representative examples of fluorinated emulsifiers according to above formula (I) include perfluoroalkanoic acids and salts thereof such as perfluorooctanoic acid and its salts, in particular ammonium salts, such as ammonium perfluoro octanoic acid (APFO).

Other examples of emulsifiers include perfluorinated or partially fluorinated carboxylic acids or salts thereof corresponding to the general formula:

[R_{f}-O-L-COO⁻]ᵢ Xⁱ⁺ (II)

wherein L represents a linear fully or partially fluorinated alkylene group, R_{f} represents a linear fully or partially fluorinated aliphatic group or a linear fully or partially fluorinated aliphatic group interrupted with one or more oxygen atoms, Xⁱ⁺ represents a cation having the valence i and i is 1, 2 or 3. Examples of cations include H⁺, ammonium, monovalent metal cations, divalent metal cations and trivalent cations. Typical cations are H⁺ K⁺, Na⁺ and NH₄⁺.

Examples for emulsifiers according to formula (II) are described in greater detail in US Pat. Appl. 2007/0015937 by Hintzer et al.
Specific examples of compounds according to formula (II) include the following:
**R_{f}-O-CHF-COOH :**
   C₃F_{f}-O-CHF-COOH, CF₃-O-CF₂CF₂-CF₂-O-CHF-COOH, CF₃CF₂CF₂ -O-CF₂CF₂-CF₂-O-CHF-COOH, CF₃-O-CF₂-CF₂-O-CHF-COOH, CF₃-O-CF₂-O- CF₂-CF₂-O-CHF-COOH, CF₃-(O-CF₂)₂-O-CF₂-CF₂-O-CHF-COOH, CF₃-(O-CF₂)₃-O-CF₂-CF₂-O-CHF-COOH;
**R_{f}-O-CHF-CF₂-COOH:**
   CF₃-O-CHF-CF₂-COOH, CF₃-O-CF₂-CF₂-O-CHF-CF₂-COOH, CF₃-CF₂-O-CHF-CF₂-COOH, CF₃-O-CF₂-CF₂-CF₂-O-CHF-CF₂-COOH, CF₂-O-CF₂-O- CF₂-CF₂-O-CHF-CF₂-COOH, CF₃-(O-CF₂)₂-O-CF₂-CF₂-O-CHF-CF₂-COOH, CF₃-(O-CF₂)₃-O-CF₂-CF₂-O-CHF-CF₂-COOH;
**R_{f}-O-CF₂-CHFCOOH:**
   CF₃-O-CF₂-CHF-COOH, C₃F₇-O-CF₂-CHF-COOH, CF₃-O-CF₂-CF₂-CF₂-O-CF₂-CHF-COOH, CF₃-O-CF₂-O-CF₂-CF₂-O-CF₂-CHF-COOH, CF₃-(O-CF₂)₂-O-CF₂-CF₂-O-CF₂-CHF-COOH, CF₃-(O-CF₂)₃-O-CF₂-CF₂-O-CF₂-CHF-COOH;
**R_{f}-O-CF₂-CHF-CF₂COOH:**
   CF₃-O-CF₂-CHF-CF₂-COOH, C₂F₅-O-CF₂-CHF-CF₂-COOH, C₃F₇-O-CF₂-CHF-CF₂-COOH, CF₃-O-CF₂-CF₂-CF₂-O-CF₂-CHF-CF₂-COOH, CF₃-O-CF₂-O- CF₂-CF₂-O-CF₂-CHF-CF₂-COOH, CF₃-(O-CF₂)₂-O-CF₂-CF₂-O-CF₂-CHF-CF₂-COOH, CF₃-(O-CF₂)₃-O-CF₂-CF₂-O-CF₂-CHF-CF₂-COOH;
**R_{f}-(O)ₘ-CHF-CF₂-O-(CH₂)ₙ-COOH n=1,2 or 3; m=0 or 1:**
   CF₃-O-CHF-CF₂-O-CH₂-COOH, CF₃-O-CF₂-CF₂-CF₂-O-CHF-CF₂-O-CH₂-COOH, C₃F₇-O-CHF-CF₂-O-CH₂-COOH, C₃F₇-O-CHF-CF₂-O-CH₂-CH₂-COOH, C₃F₇-O-CF₂-CF₂-O-CHF-CF₂-OCH₂COOH, C₃F₇-O-CF₂-CF₂-CF₂-O-CHF-CF₂-OCH₂COOH, C₃F₇-O-CF₂-CHF-CF₂-OCH₂COOH, CF₃-CHF-CF₂-O-CH₂COOH, C₃F₇-CF₂-CHF-CF₂-OCH₂-COOH, CF₃-O-CF₂-CF₂-O-CH₂-COOH, CF₃-O-CF₂-CF₂-CF₂-O-CF₂-CF₂-O-CH₂-COOH, C₃F₇O-CF₂-CF₂-O-CH₂-COOH, C₃F₇-O-CF₂-CF₂-O-CH₂-CH₂-COOH, C₃F₇O-CF₂-CF₂-O-CF₂-CF₂-OCH₂COOH, C₃F₇-O- CF₂-CF₂-CF₂O-CF₂-CF₁-OCH₂COOH, C₃F₇-O-CF₂-CF₂-CF₂-OCH₂COOH, C₄F₉-O-CH₂-COOH, C₄F₉-O-CH₂-CH₂-COOH, C₃F₇- O-CH₂COOH, C₆F₁₃OCH₂-COOH, R_{f}-O-CF₂-CF₂-COOH, CF₃-O-CF₂-CF₂-COOH, C₂F-O-CF₅-CF₂-COOH, C₃F₇-CF₂ -CF₂-COOH, C₄F₉-O-CF₂-CF₂-COOH,
**R_{f}-O-CF₂)ᵤ-O-CF₂-COOH:**
   CF₃-(O-CF₂)₃-O-CF₂-COOH, CF₃-(O-CF₂)₂-O-CF₂COOH, CF₃-(O-CF₂)₁-O-CF₂-COOH;
**R_{f}-(O-CF₂-CF₂)ₖ-O-CF₂-COOH with k being 1, 2 or 3:**
   CF₃-(O-CF₂-CF₂)₁-O-CF₂-COOH, C₂F₅-(O-CF₂-CF₂)₁-O-CF₂-COOH, C₃F₇-(O-CF₂CF₂)₁-O-CF₂-COOH, C₄F₉-(O-CF₂-CF₂)₁-O-CF₂-COOH, C₂F₅-(O-CF₂-CF₂)₂-O-CF₂-COOH, CF₃-(O-CF₂-CF₂)₂-O-CF₂-COOH, C₃F₇-(O-CF₂-CF₂)₂-O-CF₂-COOH, C₄F₉-(O-CF₂-CF₂)₂-O-CF₂-COOH;
**R_{f}-O-CF₂-COOH:**
   C₃F₇-O-CF₂-COOH, CF₃-O-CF₂-CF₂-CF₂-O-CF₂-COOH;
**CF₃-CHF-O-(CF₁)ₒ-COOH with o being an integer of 1, 2, 3, 4, 5 or 6:**
   CF₃CFH-O-(CF₂)₃-COOH, CF₃CFH-O-(CF₂)₅-COOH
**CF₃-CF₂-O-(CF₂)ₒ-COOH:**
   CF₃-CF₂-O-(CF₂)₃COOH, CF₃-CF₅-O-(CF₂)₅COOH

Yet further examples of fluorinated emulsifiers correspond to the general formula (III):

M'(Z'-R_{f}-Z) M (III)

wherein R_{f} represents a linear or branched perfluorinated or partially fluorinated alkylene having 4 to 10 carbon atoms; Z and Z' represent independently from each other COO⁻ or SO₃; M and M' represent independently from each other a monovalent cation, for example, an alkali metal ion or an ammonium ion.

Another type of emulsifiers corresponds to general formula (IV):

(Y-(R'_{f})-Z) M (IV)

wherein Y represents Cl or F or CF2H; R'_{f} represents a linear or branched partially fluorinated alkylene having 4 to 10 carbon atoms; Z represents COO⁻, OSO₃⁻ or SO₃⁻; M represents a monovalent cation, for example, an alkali metal ion or an ammonium ion.

The partially fluorinated alkylene means the alkylene contains at least one unit selected from -CFH-, -CFH₂, -CF₂H or -CH₂- units or combinations thereof, but the alkylene may otherwise be perfluorinated or not fluorinated. The alkylene may comprise repeating units derived from the monomers employed in the polymerization.

Fluorinated emulsifiers corresponding to the general formula (III) and (IV) are typically generated *in situ* during the polymerization for example by recombination or by incomplete polymerization. In particular, these emulsifiers may be generated *in situ* in the preparation of fluoroelastomers by aqueous emulsions or by suspension and solvent polymerization.

Generally, the fluorinated emulsifiers according to formulae (I), (II), (III) or (IV) are low molecular weight compounds, for example compounds having a molecular weight for the anion part of the compound of not more than 1000 g/mol, typically not more than 600 g/mol and in particular embodiments, the anion of the fluorinated carboxylic acid may have a molecular weight of not more than 500 g/mol.

The aqueous phase may contain at least 10 ppm, at least 20 ppm, at least 100 ppm, at least 200 ppm, at least 500 or at least 1,000 ppm of an emulsifier according to formula (I), (II), (III) to (IV).

### Particles

The aqueous phase may also contain particles. The particles may have an average particle size (number average) of from about 10 or about 50 nm to about 400 nm. Generally, the aqueous phase may contain from 0.01 to about 10 % wt of particles.

### Polycationic polymers and precursor polymers thereof

The amount of the fluorinated compounds in an aqueous phase can be significantly reduced by adding thereto at least one polycationic polymer or a precursor polymer in an effective amount to cause precipitation of fluorinated compounds.

The polycationic polymers or precursors thereof may have a molecular weight (number average (Mn)) of from at least about 5,000, at least about 10,000 g/mol, at least about 50,000 g/mol or at least about 500,000 g/mol.

Suitable precursor polymers of the polycationic polymers are polymers that upon protonation form cationic groups, such as for example, polyamines or polyimines. Thus, the polycationic polymers may be formed in acidic or acidified waste water through protonation.

The polycationic polymers or precursor polymers may be aliphatic or aromatic or both. They may be linear or branched and may also contain cyclic moieties.

The polycationic polymers contain cationic groups, including, for example, protonated amine groups, wherein these amines may be aliphatic, cyclic or aromatic. These amine groups may be part of the polymer backbone, or as part of a pending group or part of a group that is grafted onto the polymer backbone. Preferably, the polycationic polymer contains -N+R₁R₂R, groups, -R₄N+R₅R₆ groups or combinations thereof in which R₁, R₂, R₃ represent independently from each other hydrogens or linear, branched or cyclic, saturated or non-saturated hydrocarbons, such as alkyl, aryl or alkaryl residues. R₄ and R₅ are part of an aliphatic or aromatic ring that forms with the nitrogen atom a cyclic amine or an N-hetero aromatic group. R₆ may be hydrogen or a linear, cyclic, aliphatic or aromatic hydrocarbon, such as an alkyl, aryl or alkaryl residue. Typical examples of cationic groups include trialkylammonium, dialkylbenzyl ammonium, or pyridinium groups.

The precursor polymers may contain the groups that upon protonation form the cationic groups described above.

The polymers may be copolymers comprising repeating units derived from polyethylene, acrylamide and/or acrylamide derivatives, such as, methacrylamides. The polymers may also be or comprise cationically modified starches, that is, starches that have been chemically modified to contain cationic residues as described above.

Suitable polyamines or polyimines include, for example, polyethylene imines (for example, LUPASOL SK, LUPASOL P from BASF; Ludwigshafen) and polyamines (for example, ZETAG 7197, CIBA Speciality Chemicals, Bradford, UK). Suitable examples of polycationic polymers include ammonium group containing polymers such as cationic acrylamide copolymers (ZETAG 8816, 8818, ZETAG 8846 FS, ZETAG 8868 FS, from CIBA Speciality Chemicals, Bradford, UK or PRAESTOL K, E or BC series from Ashland, Krefeld, Germany), poly (diallyldimethyl ammonium chloride) (PDADMAC, commercially available as POLYQUAT from Katpol Chemie GmbH, Bitterfeld, Germany or Aldrich, Munich, Germany) or copolymers thereof, copolymers of acrylamide and N-acryloyloxyethyl-N,N,N-trimethyl ammonium salts such as P(AAm-co-ADAM, commercially available as PRAESTOL, from Ashland), polyvinyl benzyl trialkyl ammonium chloride (PVBAC), poly(methacroyloxyethyl) dimethyl benzoyl ammonium chloride (PMBQ), methacrylamido propyl trimethyl ammonium chloride and mixtures thereof or cationic modified starches.

### Polyanionic polymers

The amount of at least one fluorinated compound in the aqueous phase can be further reduced by adding thereto at least one polyanionic polymer.

The polyanionic polymers may be added simultaneously with the polycationic polymers or subsequently to it. The polyanionic polymers may have a molecular weight (number average Mn) of from at least about 5,000, 10,000, 50,000, 100,000, 300,000 or at least about 500,000 g/mol.

Preferably, the polyanionic polymer has a molecular weight (number average) of at least about 100,000 g/mol or at least 200,000 g/mol. The polymers may have an average molecular weight (Mn) of up to about 2 or up to about 5 million g/mol.

Anionic groups may include, for example, carboxylate groups, sulphate groups, sulfonate groups, phosphate groups, phosphonate groups or combinations thereof.

Examples of suitable polymers include but are polymers comprising repeating units derived from acrylic acid or acrylic acid derivates. The polymers may be homo or copolymers. Typical examples are copolymers of acrylic acid and acrylamides (commercially available as PRAESTOL from Ashland, Krefeld Germany or MAGNAFLOC 90 L - 120 L, available from Ciba Speciality Chemicals, Basel, CH), poly styrene sulfonic acids, poly 2-acrylamido-2-methyl propane sulfonic acids.

### Process of removing fluorinated compounds from an aqueous phase

The process of removing fluorinated compounds from an aqueous phase involves providing an aqueous phase originating from the preparation or purification of fluoropolymers by polymerizing fluorinated monomers in an aqueous medium. The process further comprises adding at least one polycationic polymer to the aqueous phase.

The polymers are added in an effective amount to initiate precipitation. They may be continued to be added after the precipitation has started. The most effective amounts of polymers depend on the type of the aqueous phase, the pH of the aqueous phase and the type of polymer (for example, charge density of the polymer number of cationic groups and molecular weight) and can be optimised by routine experimentation of one skilled in the art. Typically, at least 0.01 mg or at least 0.1 mg of polymer per ppm of organic bound F are employed. Typical amounts range from 0.01 to 50 mg (or from 0.05 to 5 mg of polymer) per ppm of organic bound F in the aqueous phase.

The polymers may be added as aqueous solutions, dispersions, emulsions or as solids. They may be added at once, continuously or at intervals.

The process further comprises adding at least one polyanionic polymer to the waste water. The polyanionic polymers are added during or after the addition of the polycationic polymer. Preferably, the polyanionic polymer is added after the polycationic polymer has been added, preferably after a precipitate has formed.

The polyanionic polymers are added in an effective amount to increase precipitation. The most effective amounts depend on the type of aqueous phase, the pH of the waste water and the type of cationic polymer (for example, charge density of the polymer - number of cationic groups and molecular weight) and the type of polyanionic polymers (for example, charge density of the polyanionic polymer) and can be optimised by routine experimentation of one skilled in the art. Typically, the weight ratio of polyanionic polymer to polycationic polymer may be from 1 to 100 or from 10 to 100.

The precipitation may be aided by the addition of inorganic salts, by reducing the operating temperatures or by increasing operating pressures. Generally, the process may be carried out at ambient temperature and pressure.

The precipitate can be removed by conventional techniques including, for example, sedimentation, centrifugation and/or filtration.

### Recovering fluorinated compounds from the precipitate

The fluorinated compounds may be recovered from the precipitate, which is another advantage of the process described herein. For example, fluorinated emulsifiers and/or fluorinated low molecular weight oligomers may be recovered and recycled for further use in polymerizations.

For example, the precipitate, which typically may comprise the flocculants (polycationic and/or polyanionic polymers), fluorinated emulsifiers, fluorinated oligomers and polymer particles may be treated with strong acids, such as, for example, HF, HCl, H₃PO₄, H₂SO₄, HNO₃, chromic acid, organic acids or a combination thereof. The acids are typically added in an amount sufficient to generate a pH of less than about 4, preferably less than about 2. Sulfate-terminated oligomers will be hydrolyzed under these conditions and the generated alcohols and/or carboxylic acids can be removed by distillation, preferably steam distillation, at ambient or reduced pressure. Fluorinated emulsifiers may also be separated from the precipitate in this way. Alternatively, or in addition to it, alcohols may be added to the acidic reaction mixture upon which the carboxylic acids may be converted into esters. Generally, alcohols such as methanol ethanol, propanol, isopropanol or another aliphatic or aromatic of from 4, 5, 6 or 7 and up to 20 C-atoms may be used for this purpose. The esters formed by the reaction can be phase-separated or distilled off. Alternatively, fluorinated emulsifiers, oligomers and/or polymers may be recovered from the acidified precipitate by extraction using suitable solvents, such as, for example, hydrofluoroethers (HFE from 3M, St. Paul, MN, USA) ethers ketones or acetates or using super critical media, such as super critical CO₂.

Therefore, the process may additionally involve:
- treating the precipitate with acids to adjusting the pH of the precipitate to a pH of less than about 4;
- removing alcohol-terminated fluorinated compounds by distillation or extration.

The process may further involve:
- treating the precipitate with acids to adjusting the pH of the precipitate to a pH of less than about 4 and (simultaneously or subsequently) adding an aliphatic or aromatic alcohol;
- removing the formed esters from the precipitate, for example by distillation or extraction.

The following examples illustrate the invention further without the intention to limit the invention thereto.

### Test methods

### Particle sizes

The size of the particles in the waste water may be determined by dynamic light scattering using a Malvern Zetazizer 1000 HAS according to ISO/DIS 13321. The measurements were made at 25°C.

### Solid content

The solid content was determined by subjecting a 10 ml sample of the waste water to a temperature of 250 °C for 30 minutes and weighing the residue. The solid content of the total sample was then calculated (according to ISO 12086).

### Fluorinated emulsifier content

The content of fluorinated emulsifiers can be measured by gas chromatography (head space), by converting the emulsifiers into the corresponding methyl esters (using sulfuric acid and methanol) and using the methyl ester of perfluorododecanoic acid as internal standard.

### Determination of total organic fluorine (TOF)

For the determination of the total organic fluoride content an aliquot of the sample (sample 1) was analysed by fluoride-sensitive electrodes according to DIN 38405-D4. Another aliquot of the sample (sample 2) was subjected to Wickbold combustion and subsequently analysed for F-content by fluoride-sensitive electrodes. TOF was calculated by subtracting the F-content of sample I from sample 2.

### F-determination with F-electrodes:

A known amount of sample was introduced into a 100 ml plastic cylinder and filled up with water to 25ml. 25 ml of TISAB buffer was added. The pH of the solution was controlled to be at 5.5 using a pH-electrode. If necessary the pH was adjusted by adding 8 molar NaOH.
The F-content in the adsorption solution was determined using a fluoride electrode at a pH between 5 and 6 (Orion lonometer EA 640, Orion F-electrode 90-02, Orion reference-electrode 94-09 SC, from Thermo-Fisher Scientific Inc, Waltham, MA, USA).

The TISAB-solution was prepared by combining 500 mL H2O, 57 ml glacial acetic acid, 58 g NaCl and 5g 1,2-diamino cyclohexane tetraacetic acid (IDRANAL IV) and adjusting the pH to 5.5 using 8 molar NaOH and a pH-electrode (Orion pH Electrode 9156 SC from Thermo Fisher Scientific Inc, Waltham, MA, USA).

### Wickbold combustion:

An aliquot of the fluorine-containing sample was introduced into a quarz glass container and the weight of the sample was determined. 100 mL of water was filled into the absorption reservoir of the incinerator (Wickbold Heraeus W4, Heraeus Quarzglass GmbH, Kleinostheim, Germany). After combustion of the sample the absorption solution was transferred into a measuring cylinder and filled up with water to 250 ml.
Aliquots were transferred into a 100ml plastic measuring cylinder and filled with H2O to 25 ml. 25ml of a TISAB buffer was added and the F-content of this solution were subjected to F-determination with the F-electrode as described above.

### Materials

MAGNAFOC 90L: polyanionic polyacrylamide, medium molecular weight range, low charge density, from Ciba Speciality Chemicals, Basel, Switzerland;
MAGNAFLOC 110L: polyanionic polyacrylamide, medium molecular weight range, medium charge density from Ciba Speciality Chemicals, Basel, Switzerland;
LUPASOL P: polyethylene imine, molecular weight about 750,000 g/mol, charge density 20 meq/g from BASF, Ludwigshafen, Germany;
ZETAG 8818 polycationic polyacrylamide, very high molecular weight range, high charge density from Ciba Speciality Chemicals, Basel, Switzerland;
PDADMAC: poly diallydimethyl ammonium chloride, molecular weight range of 200,000 to 350,000 g/mol, high charge density, from Aldrich, Munich, Germany.

### Examples

### Examples

### Example 1: APFO removal by precipitation (not claimed)

1.2 ml of an aqueous solution of Lupasol P (BASF) (0.1 %wt) was added under gentle agitation to 100 ml of APFO solution (containing 95 ppm APFO) at a pH of about 7 giving an aqueous phase of 101.2 ml from which a precipate was formed. The precipitate was removed after 30 minutes by filtration through a filtering device (pore size 0.2 µm). The filtered solution had an APFO concentration of 16 ppm; efficiency rate of APFO removal was -83%.

### Example 2: APFO removal by precipitation (not claimed)

Various amounts of the flocculants shown in the table bellow were added under gentle agitation to 100 ml of APFO solution (containing the amount of APFO as indicated in the table below) at a pH of about 7. The resulting precipitate - was removed from the aqueous phase after 30 minutes by filtration through a filtering device (pore size 0.2 µm). The APFO content and the efficiency rate of APFO are also shown in the table below.

| APFO staring concentration (ppm) | Flocculant | Amount of flocculant (mg) | Finial APFO-concentration (mg) | Efficiency (%) |
|---|---|---|---|---|
| 95 | ZETAG 8818 | 23,9 | 3 | 96 |
| 380 | PDADMAC | 190 | 2 | 99 |
| 380 | PDADMAC | 19 | 51 | 86 |
| 3 | PDADMAC | 0.3 | 0,5 | 83 |
| 410 | PDADMAC | 82 | 1 | 99 |

### Example 3: Recycling of APFO (not claimed)

6 kg of an aqueous solution containing 0.35 %wt APFO were treated with 30g of an aqueous solution containing 20.0 %wt PDADMAC. 17 g of APFO were removed by precipitation. The precipitate was added to a mixture of 200 ml MeOH, 100 ml H₂O and 10 ml conc. H₂SO₄; the whole reaction mixture was treated under reflux conditions and after 2 hours the formed ester was distilled off. 16.5 g of the perfluoro octanoic methyl ester were recovered. The methyl ester was converted into the ammonia salt by adding aqueous ammonia and simultaneously distilling of water/methanol.

### Example 4: Waste water from the preparation of a fluoroelastomer

A polymerization kettle with a total volume of 49 L equipped with an impeller agitator was charged with 29.0 L deionized water, 63 g aqueous ammonia solution (25%), and 40 g diethyl malonate. The oxygen-free kettle was then heated to 73°C and the agitation system was set to 240 rpm. The kettle was charged with HFP to 6.6 bar absolute, then with VDF to 10.9 bar absolute and with TFE to 12.0 bar absolute reaction pressure. The polymerization was initiated by the addition of 240 g 25% wt aqueous ammonium peroxodisulfate solution. As the reaction started, the reaction pressure of 12.0 bar absolute was maintained by feeding TFE, VDF and HFP into the gas phase with feeding ratios of HFP(kg)/ TFE(kg) of 1.285 and of VDF(kg)/ TFE(kg) of 1.831. The reaction temperature of 73°C was also maintained. After 5h 3.43 kg of TFE were fed and the monomer valves were shut. Within 30 minutes the reaction pressure was down to 3.5 bar. The reactor was vented and flushed with nitrogen in three cycles.

The thus obtained polymer dispersion (44.2 kg) had a solid content of 34.5%. The latex particle diameter was 320 nm according to dynamic light scattering.

1L of the dispersion was treated with 250 ml of a 4 % wt. aqueous MgCl₂ solution under stirring upon which the fluoropolymers coagulated. The obtained solid was washed with 2.5 L of hot (65°C) and 2.5 L of cold water. The aqueous phases were collected. The combined aqueous phases contained 570 µg/g chloride and 190 µg/g magnesium. The chloride content was determined by ion chromatography (DIN ISO 10304/1 1995). Magnesium was determined by ICP-OES according to DIN ISO 11885-E22. The analysis of the sample using a fluoride selective electrode (with and without Wickbold incineration) gave a content of organic fluorine (TOF) of 65 µg/g.

### Example 5: Reducing the amount of fluorinated compounds from waste water

300 g of the aqueous phase (waste water) obtained in example 4 were treated under stirring with 71.9 g of an aqueous solution containing 0.1% wt. of ZETAC 8818. The mixture was stirred for 40 minutes. Small particles were generated which slowly precipitated. The mixture contained 65 µg/g of organic fluoride (TOF) and was divided into 3 equal portions.

Portion 1 was filtered without further treatment. The content of organic bonded fluorine was reduced from 65 µg/g to 49 µg/g (-25%).

Portion 2 was treated with 9.1 g of 0.1 wt% aqueous solution of Magnafloc 110L under stirring and stirred for 40 minutes. The filtered solution contained 44 µg/g of organic bonded fluorine (-33%).

Portion 3 was treated with 28.5 g of 0.1 wt% aqueous soution of Magnafloc90L under stirring and stirred for 40, minutes. The filtered solution contained 39 µg/g of organic bonded fluorine (-40%).

### Example 6 (comparative): removal of fluorionated compounds by anion-exchange

A sample of the aqueous phase (waste water) obtained in example 4 (treated with 150 ppm GENAPOL X 080 to avoid clogging) was pumped over a column (9 cm x 40 cm²) containing AMBERJET 4200Cl at a flow rate of 430 mL/h. The volume of the bed was 350 mL. After 70L and 200L of the waste had flowed through the column, samples were taken and the content of fluorinated organic compounds analyzed. The TOF at an eluted volume of 70L was 41 µg/g (-38%), and at an eluted volume of 200 L 44 µg/g (-32%).

## Claims

1. A process for reducing the amount of fluorinated compounds in an aqueous phase, the process comprising
a) adding to the aqueous phase one or more polycationic polymers or precursor polymers thereof to cause at least partial precipitation of fluorinated compounds, and
b) adding to the aqueous phase one or more polyanionic polymers,
wherein b) is carried out after or simultaneously with a) and wherein the aqueous phase is generated in the production of fluoropolymers comprising repeating units derived from vinylidene fluoride (VDF).

2. The process according to claim 1 wherein the aqueous phase contains at least 20 ppm of a fluorinated emulsifier.

3. The process according to anyone of the preceding claims, wherein the polycationic polymers or precursor polymers thereof have a molecular weight (number average) of at least 5,000 g/mol.

4. The process according to anyone of the preceding claims wherein the polyanionic polymers have a molecular weight (number average) of at least 5,000 g/mol.

5. The process according to anyone of the preceding claims wherein the aqueous phase comprises less than 10 % wt. of solids. (ISO 12086)

6. The process according to anyone of the preceding claims wherein the aqueous phase contains at least 50 µg per g of aqueous phase of anions selected from the group consisting of chloride, nitrate, phosphate, hydrogen phosphate, sulphate, hydrogensulfate, monocarboxylate, dicarboxylate, sulfonate, phosphonate or a combination thereof.

7. The process according to anyone of the preceding claims wherein the aqueous phase has been obtained after salt-induced coagulation of the fluoropolymers.

8. The process according to anyone of the preceding claims further comprising acidifying the precipitate and recovering one or more fluorinated compounds from the precipitate by extraction or distillation.

## Patentansprüche

1. Verfahren zum Reduzieren der Menge an fluorierten Verbindungen in einer wässrigen Phase, wobei das Verfahren Folgendes umfasst
a) Zugeben von einem oder mehreren polykationischen Polymeren oder Vorläuferpolymeren davon zu der wässrigen Phase, um eine zumindest teilweise Ausfällung fluorierter Verbindungen zu bewirken, und
b) Zugeben eines oder mehrerer polyanionischer Polymere zu der wässrigen Phase,
wobei b) nach oder gleichzeitig mit a) durchgeführt wird und wobei die wässrige Phase bei der Herstellung von Fluorpolymeren erzeugt wird, die Wiederholungseinheiten umfassen, die von Vinylidenfluorid (VDF) abgeleitet sind.

2. Verfahren nach Anspruch 1, wobei die wässrige Phase mindestens 20 ppm eines fluorierten Emulgators enthält.

3. Verfahren nach einem der vorstehenden Ansprüche, wobei die polykationischen Polymere oder Vorläuferpolymere davon ein Molekulargewicht (Zahlenmittel) von mindestens 5.000 g/mol aufweisen.

4. Verfahren nach einem der vorstehenden Ansprüche, wobei die polyanionischen Polymere ein Molekulargewicht (Zahlenmittel) von mindestens 5.000 g/mol aufweisen.

5. Verfahren nach einem der vorstehenden Ansprüche, wobei die wässrige Phase weniger als 10 Gew. -% Feststoffe umfasst. (ISO 12086)

6. Verfahren nach einem der vorstehenden Ansprüche, wobei die wässrige Phase mindestens 50 µg pro g wässrige Phase an Anionen ausgewählt aus der Gruppe bestehend aus Chlorid, Nitrat, Phosphat, Hydrogenphosphat, Sulfat, Hydrogensulfat, Monocarboxylat, Dicarboxylat, Sulfonat, Phosphonat oder einer Kombination davon enthält.

7. Verfahren nach einem der vorstehenden Ansprüche, wobei die wässrige Phase nach salzinduzierter Koagulation der Fluorpolymere erhalten wurde.

8. Verfahren nach einem der vorstehenden Ansprüche, ferner umfassend
Ansäuern der Ausfällung und Erhalten einer oder mehrerer fluorierter Verbindungen aus der Ausfällung durch Extraktion oder Destillation.

## Revendications

1. Procédé pour réduire la quantité de composés fluorés dans une phase aqueuse, le procédé comprenant
a) l'ajout à la phase aqueuse d'un ou plusieurs polymères polycationiques ou polymères précurseurs de ceux-ci pour amener une précipitation au moins partielle de composés fluorés, et
b) l'ajout à la phase aqueuse d'un ou plusieurs polymères polyanioniques,
dans lequel b) est effectué après ou en même temps que a) et dans lequel la phase aqueuse est produite lors de la production de fluoropolymères comprenant des motifs de répétition dérivés de fluorure de vinylidène (VDF).

2. Procédé selon la revendication 1, dans lequel la phase aqueuse contient au moins 20 ppm d'un émulsifiant fluoré.

3. Procédé selon l'une quelconque des revendications précédentes, dans lequel les polymères polycationiques ou polymères précurseurs de ceux-ci ont une masse moléculaire (moyenne en nombre) d'au moins 5000 g/mol.

4. Procédé selon l'une quelconque des revendications précédentes, dans lequel les polymères polyanioniques ont une masse moléculaire (moyenne en nombre) d'au moins 5000 g/mol.

5. Procédé selon l'une quelconque des revendications précédentes, dans lequel la phase aqueuse comprend moins de 10 % en poids de solides. (ISO 12086)

6. Procédé selon l'une quelconque des revendications précédentes, dans lequel la phase aqueuse contient au moins 50 µg, par g de phase aqueuse, d'anions choisis dans le groupe constitué de chlorure, nitrate, phosphate, hydrogénophosphate, sulfate, hydrogénosulfate, monocarboxylate, dicarboxylate, sulfonate, phosphonate ou une combinaison de ceux-ci.

7. Procédé selon l'une quelconque des revendications précédentes, dans lequel la phase aqueuse a été obtenue après une coagulation induite par sel des fluoropolymères.

8. Procédé selon l'une quelconque des revendications précédentes, comprenant en outre l'acidification du précipité et la récupération d'un ou plusieurs composés fluorés du précipité par extraction ou distillation.
